# EUROPEAN PATENT APPLICATION

(11) **EP 1 209 128 A2**
(43) Date of publication of application: **29.05.2002**
(21) Application number: 01127860.3
(22) Date of filing: 22.11.2001
(51) Int. Cl.: C03B 7/086

(54) **Plunger mechanism for feeding gobs of molten glass**

(30) Priority: 24.11.2000 IT TO001105
(71) Applicant: BOTTERO S.p.A., 12100 Cuneo (IT)
(72) Inventor: Sesia, Carlo, 12100 Cuneo (IT); Borsarelli, Gianclaudio, 12100 Cuneo (IT); Armando, Lorenzo, 12100 Cuneo (IT); Viada, Bruno, 12010 Madonna delle Grazie (IT)
(74) Representative: Franzolin, Luigi

(57) **Abstract**

An apparatus (1) for forming and feeding a molten glass gob (2) has a fixed supporting frame (4); a guide (11) integral with the frame (4) and having a substantially vertical axis (12); a slide (13) fitted in axially-sliding manner to the guide (11); and at least one feed plunger (6) parallel to the axis (12), connected integrally to the slide, and moved cyclically to form the glass gob (2) by a linear electric motor connected directly to the slide (13).

## Description

The present invention relates to a unit for forming molten glass beads.

In glassware manufacturing, glass gobs are used, which are formed by first forming a molten glass bead, and then cutting the bead using a normally scissor-type cutting device.

The molten glass bead is formed from a mass of molten glass using forming units, which normally comprise a container for the mass of molten glass; one or more vertical punches carried by a slide running along a vertical guide; and a slide actuating device for moving the punches back and forth cyclically through the mass of molten glass to force it gradually out through one or more openings formed in the bottom of the container and so form one or more glass beads.

In most applications, the actuating device is mechanical, and comprises an electric rotary motor having an output shaft rotating about its axis; and a mechanical lever- or screw-nut screw-type transmission interposed between the output shaft of the motor and the slide to convert the rotary motion of the output shaft of the motor to translational back and forth motion of the slide.

Though widely used, known forming units have several drawbacks, all due to the particular design of the slide actuating devices.

As is known, such devices are designed to minimize inertia and internal friction, so as to achieve as high an operating rate as possible with the minimum amount of energy, and to minimize slack between the parts in relative motion - particularly in the transmission connecting the rotary motor to the slide - so as to ensure precise movement of the punches and safeguard against positioning errors which, though negligible in a single extrusion cycle, must be taken into serious consideration when the punch movement is varied continuously to produce series of gobs differing in weight, shape and size.

For these reasons, known actuating devices are fairly complex in design, call for routine maintenance and inspection, and are expensive to both produce and run as compared with the rest of the forming unit.

Known devices also comprise a large number of, at times, fairly complex component parts, and are relatively bulky, especially crosswise to the punches.

It is an object of the present invention to provide a forming unit designed to eliminate the aforementioned drawbacks, and which, in particular, is cheap and easy to produce, and provides for a high degree of efficiency and reliability.

According to the present invention, there is provided a unit for forming a molten glass bead, the unit comprising a fixed supporting frame; a guide integral with said frame and having a substantially vertical axis; a slide fitted in axially-sliding manner to said guide and supporting at least one feed punch parallel to said axis; and actuating means for moving the slide cyclically in both directions along the guide; characterized in that said actuating means comprise a linear electric motor.

A non-limiting embodiment of the invention will be described by way of example with reference to the accompanying drawings, in which:
Figure 1 shows a schematic section of a preferred embodiment of the forming unit according to the present invention;
Figure 2 shows a schematic section of a variation of a detail in Figure 1.

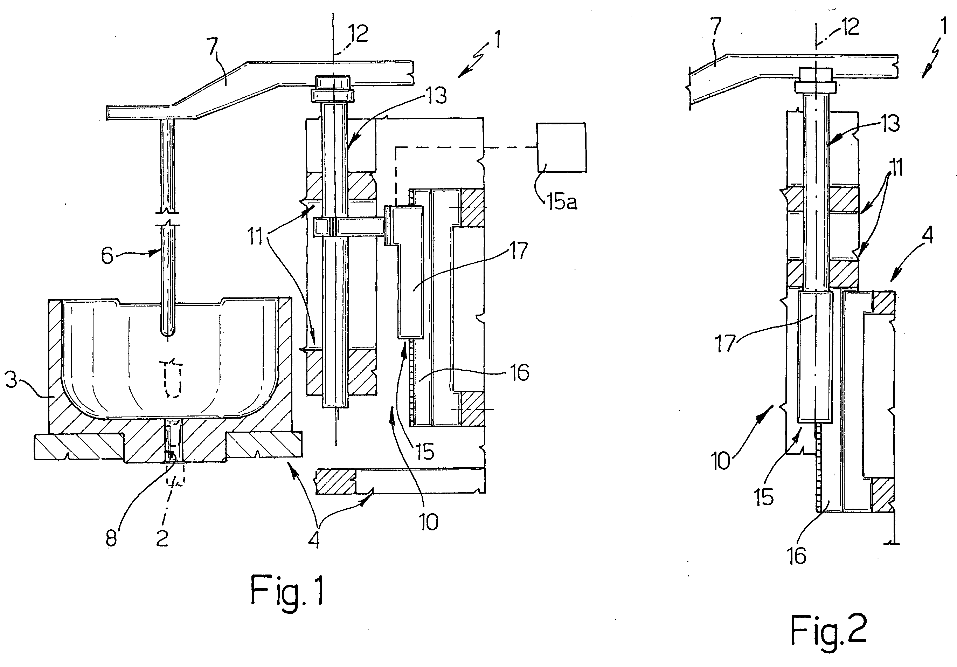

Number 1 in Figure 1 indicates as a whole a forming unit forming part of a known glassware molding machine (not shown), and for forming a molten glass bead 2 from a mass of molten glass housed in a known container 3 forming part of unit 1 and connected to a fixed supporting structure 4 also forming part of unit 1.

As shown in Figure 1, unit 1 also comprises a vertical punch 6, a top end portion of which is connected integrally to a supporting arm 7, and a bottom end portion of which extends inside container 3 and is coaxial with an opening 8 in container 3, through which glass bead 2 comes out.

Arm 7 and, therefore, punch 6 are moved up and down cyclically by an actuating device 10 comprising a guide 11 integral with structure 4 and having a vertical axis 12 parallel to punch 6; and a slide 13 - in this case, defined by a cylindrical rod coaxial with axis 12 - which is fitted in axially-sliding manner to guide 11, and is fitted integrally with projecting arm 7. Slide 13 is moved along guide 11 by a linear electric motor 15, which is controlled by a central control unit 15a, extends alongside guide 11, and comprises a fixed member 16 extending parallel to and spaced transversely apart from axis 12; and a translating member 17 connected integrally and directly to, and translating in unison with, slide 13.

In the Figure 2 variation, translating member 17 extends beneath slide 13, along axis 12, and is aligned with slide 13 so as to translate together with slide 13 along axis 12.

In a variation not shown, slide 13 comprises a hollow intermediate portion at least partly housing translating member 17 of motor 15.

As compared with known forming units, unit 1 described therefore has the advantage of being extremely straightforward in design and relatively cheap to both produce and maintain.

The reason for this substantially lies in the particular design of actuating device 10 of punch 6. That is, using a linear electric motor, as opposed to currently used rotary motors, provides, first of all, for eliminating the mechanical transmission interposed, in known actuating devices, between the output shaft of the rotary motor and the punch slide to convert the rotary motion of the output shaft of the motor to linear motion of the slide.

Compared with known units, unit 1 described therefore has very little inertia and substantially no slack, and so provides for an extremely high degree of efficiency and reliability.

In fact, in unit 1 described, slide 13 is connected directly to translating member 17 of motor 15, as opposed to motion-converting devices, thus greatly reducing, with respect to known units, both inertia and slack, which, in known solutions, pose serious problems, especially when the punch movement is varied to cut different glass gobs off the bead.

The relative arrangement of slide 13 and translating member 17 of the linear motor obviously also provides for a highly compact unit 1, particularly crosswise to punch 6 and guide 11.

Clearly, changes may be made to unit 1 as described herein without, however, departing from the scope of the present invention.

In particular, both guide 11 and slide 13 may be formed otherwise than as described by way of example; and changes may be made to both the location of translating member 17 with respect to slide 13, to reduce size as far as possible, and to the geometry of the members of linear motor 15.

## Claims

1. A unit (1) for forming a molten glass bead (2), the unit (1) comprising a fixed supporting frame (4); a guide (11) integral with said frame (4) and having a substantially vertical axis (12); a slide (13) fitted in axially-sliding manner to said guide (11) and supporting at least one feed punch (6) parallel to said axis (12); and actuating means (10) for moving the slide (13) cyclically in both directions along the guide (11); **characterized in that** said actuating means (10) comprise a linear electric motor (15).

2. A unit as claimed in Claim 1, **characterized in that** said linear electric motor (15) comprises a fixed member (16) connected integrally to said frame (4); and a translating member (17) connected to said fixed member (16) and connected integrally to said slide (13) to move in unison with the slide (13).

3. A unit as claimed in Claim 2, **characterized in that** said slide (13) is connected directly to said translating member (17).

4. A unit as claimed in Claim 2 or 3, **characterized in that** said fixed member (16) extends alongside and parallel to said guide (11), and is spaced transversely apart from the axis (12) of the guide (11).

5. A unit as claimed in Claim 2, **characterized in that** said slide (13) and said translating member (17) extend substantially along a common vertical axis (12) of travel.

6. A unit as claimed in Claim 5, **characterized in that** said slide (13) and said translating member (17) are aligned with each other along said common axis (12) of travel.

7. A unit as claimed in Claim 5 or 6, **characterized in that** said common axis coincides with the axis (12) of said guide (11).
